# EUROPEAN PATENT APPLICATION

(11) **EP 4 621 520 A1**
(43) Date of publication of application: **24.09.2025**
(21) Application number: 23891305.7
(22) Date of filing: 24.10.2023
(51) Int. Cl.: G05D 3/12, G05B 11/36, G05B 13/02

(54) **PARAMETER ADJUSTMENT METHOD AND PARAMETER ADJUSTMENT SYSTEM**

(30) Priority: 15.11.2022 JP 2022182347
(71) Applicant: Panasonic Intellectual Property Management Co., Ltd., Kadoma-shi, Osaka 571-0057 (JP)
(72) Inventor: TOSHIHIRO, Shunsaku, Kadoma-shi, Osaka 571-0057 (JP); FUJIWARA, Hiroshi, Kadoma-shi, Osaka 571-0057 (JP)
(74) Representative: SSM Sandmair
(86) International application number: PCT/JP2023/038400
(87) International publication number: WO 2024/106150

(57) **Abstract**

To efficiently adjust a control parameter of a servo control device. The parameter adjustment method includes the following procedure. That is, acquiring sensor data that is time-series data of a position deviation that is a difference between a target position and an actual position of a driver and is detected using a sensor. Correcting the sensor data based on a position deviation detected using the sensor after a timing at which movement of the driver based on a position command for moving the driver to the target position has ended. Calculating a settling time from a timing at which the driver is located at the target position in the position command to a timing at which the driver reaches an allowable position. Predicting a control parameter such that the settling time calculated based on the corrected sensor data satisfies a predetermined condition.

## Description

### TECHNICAL FIELD

The present disclosure relates to a parameter adjustment method and a parameter adjustment system for adjusting a control parameter of a servo control device that controls a servomotor.

### BACKGROUND ART

Conventionally, a parameter adjustment method for adjusting a control parameter of a servo control device that controls a servomotor is known. For example, Patent Literature 1 discloses a linear motor control device that controls a linear motor with a first servo characteristic parameter in an adjustment mode in which a correction amount is measured by a correction amount measurement part, and controls the linear motor with a second servo characteristic parameter different from the first servo characteristic parameter after the end of the adjustment mode.

### Citation List

### Patent Literature

PTL 1: Unexamined Japanese Patent Publication No. 2004-102321

### SUMMARY OF THE INVENTION

It is desired to efficiently adjust a control parameter of a servo control device that controls a servomotor.

An object of the present disclosure is to provide a parameter adjustment method and a parameter adjustment system capable of efficiently adjusting a control parameter of a servo control device.

A parameter adjustment method according to one aspect of the present disclosure is a parameter adjustment method for adjusting a control parameter for a servo control device to control a servomotor, and the parameter adjustment method includes the following. That is, acquiring sensor data that is time-series data of a position deviation that is a difference between a target position and an actual position of a driver in a target device including the driver driven by the servomotor and that is detected using a sensor. Correcting the sensor data based on the position deviation detected by using the sensor after a timing at which the movement of the driver based on the position command for moving the driver to the target position ends. Calculating, based on the corrected sensor data, a settling time that is a time from a timing when the driver in the position command reaches the target position to a timing when the driver reaches an allowable position where it can be evaluated that the driver has reached the target position. Predicting the control parameter such that the settling time calculated based on the corrected sensor data satisfies a predetermined condition.

A parameter adjustment system according to another aspect of the present disclosure performs the above parameter adjustment method.

According to the present disclosure, it is possible to provide a parameter adjustment method and a parameter adjustment system capable of efficiently adjusting a control parameter of a servo control device.

### BRIEF DESCRIPTION OF THE DRAWINGS

Fig. 1 is a schematic diagram illustrating a parameter adjustment system according to an exemplary embodiment.
Fig. 2 is a block diagram illustrating a functional configuration of the parameter adjustment system of Fig. 1.
Fig. 3 is a perspective view illustrating an example of a production device.
Fig. 4 is a table illustrating an example of sensor data.
Fig. 5 is a sequence diagram illustrating an example of an operation of the parameter adjustment system of Fig. 1.
Fig. 6 is a flowchart illustrating an example of an operation of the parameter adjustment system of Fig. 1.
Fig. 7 is a diagram illustrating an example of display displayed on the parameter adjustment system of Fig. 1.
Fig. 8 is a diagram illustrating another example of display displayed on the parameter adjustment system of Fig. 1.
Fig. 9 is a graph illustrating an example of sensor data.
Fig. 10 is a graph illustrating an example of a position command.
Fig. 11 is a graph for explaining a settling time.

### DESCRIPTION OF EMBODIMENT

Hereinafter, exemplary embodiments of the present disclosure will be described. Note that, the exemplary embodiments to be described below each illustrate one specific example of the present disclosure. Therefore, numerical values, components, arrangement positions and connection modes of the components, steps and order of the steps, and the like shown in the following exemplary embodiments are merely examples, and are not intended to limit the present disclosure. Therefore, among the components in the following exemplary embodiments, components not recited in the independent claims are described as arbitrary components.

Each of the drawings is a schematic diagram, and is not necessarily strictly illustrated. In each drawing, substantially the same components as those in other drawings are denoted by the same reference numerals, and redundant description will be omitted or simplified.

### (Exemplary embodiment)

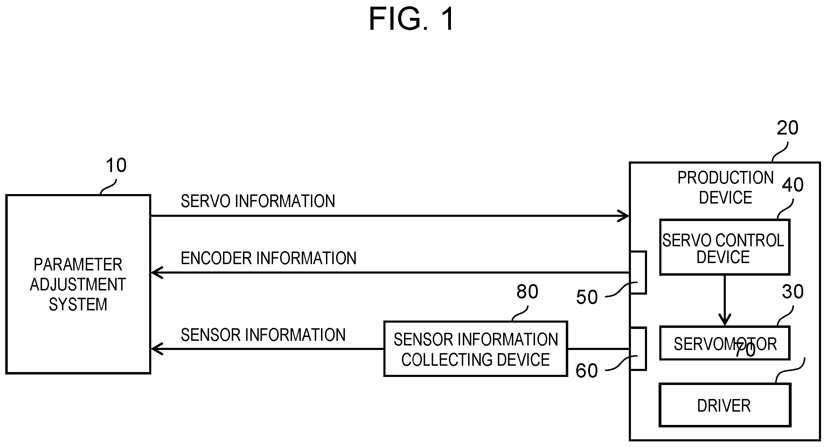

Fig. 1 is a schematic diagram illustrating parameter adjustment system 10 according to an exemplary embodiment.

Parameter adjustment system 10 is a system that adjusts control parameters. The control parameter is a control parameter for servo control device 40 to control the operation of production device 20. Specifically, the control parameter is a control parameter for servo control device 40 to control servomotor 30. For example, the control parameter is a position gain, a torque gain, an integral gain, or the like. For example, parameter adjustment system 10 is realized by a personal computer or the like.

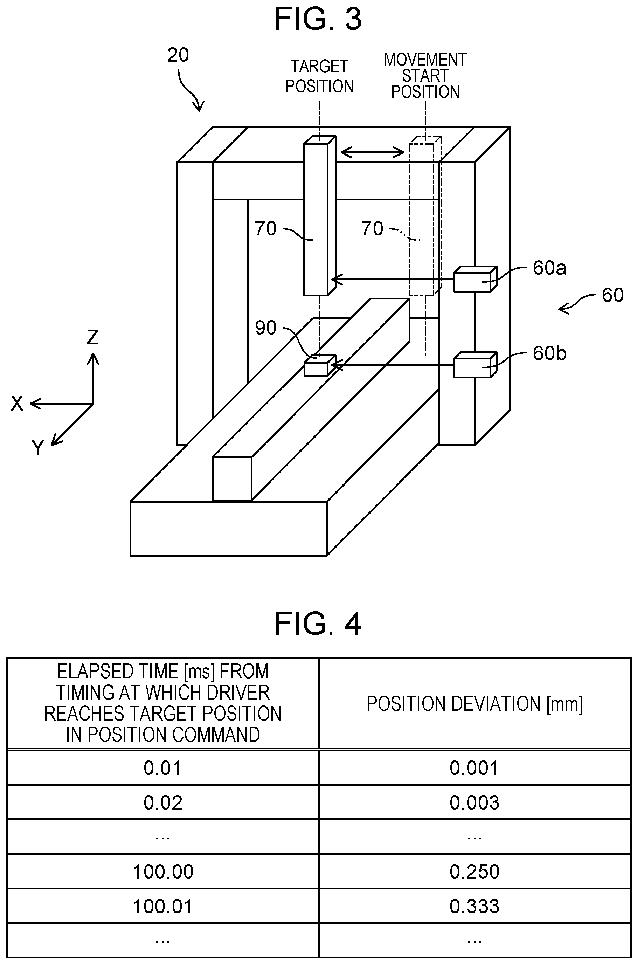

Parameter adjustment system 10 transmits servo information to servo control device 40. For example, the servo information includes a control parameter and a position command. For example, the servo information includes one or more control parameters and one or more position commands. For example, the position command indicates a drive pattern of driver 70 determined by a moving distance, a maximum speed, an acceleration time, and a deceleration time of driver 70 (see Fig. 3 to be described later), and is a command for moving driver 70 to a target position on the basis of the drive pattern. Parameter adjustment system 10 also acquires encoder information generated by encoder 50 and sensor information generated by sensor 60. For example, the encoder information includes an encoder value generated by encoder 50. Furthermore, for example, the sensor information includes sensor data generated by sensor 60.

Production device 20 is an example of a target device including driver 70 driven by servomotor 30. Production device 20 includes servomotor 30, servo control device 40, encoder 50, sensor 60, and driver 70. In addition, for example, production device 20 includes a mounting device, a processing device, or a machining device.

Servomotor 30 operates production device 20. Specifically, servomotor 30 operates production device 20 by driving driver 70 in production device 20.

Servo control device 40 controls the operation of production device 20. Specifically, servo control device 40 controls the operation of production device 20 by controlling servomotor 30. For example, servo control device 40 controls servomotor 30 based on the servo information transmitted by parameter adjustment system 10. As a result, servo control device 40 controls the operation of production device 20. For example, servo control device 40 is a servo amplifier.

Encoder 50 generates encoder information. As described above, the encoder information includes an encoder value generated by encoder 50. For example, the encoder value is a value indicating the position of servomotor 30.

Sensor 60 generates sensor information. As described above, the sensor information includes sensor data generated by sensor 60. For example, the sensor data is a value indicating the position of driver 70 described above.

Sensor information collecting device 80 collects sensor information and transmits the collected sensor information to parameter adjustment system 10. For example, sensor information collecting device 80 is realized by a personal computer or the like.

Hereinafter, parameter adjustment system 10 and related devices will be described in detail.

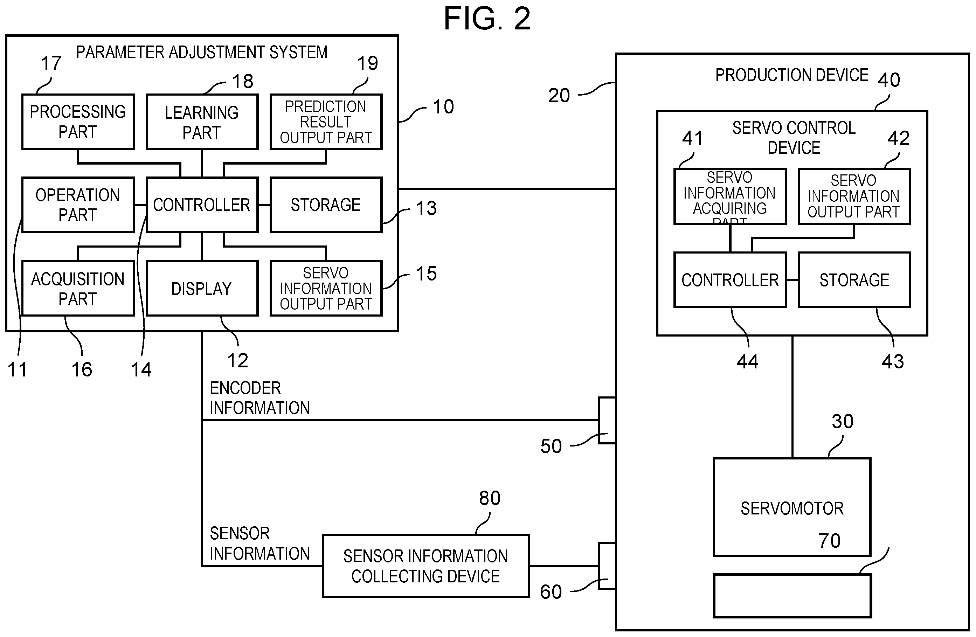

Fig. 2 is a block diagram illustrating a functional configuration of parameter adjustment system 10 of Fig. 1.

As illustrated in Fig. 2, parameter adjustment system 10 includes operation part 11, display 12, storage 13, controller 14, servo information output part 15, acquisition part 16, processing part 17, learning part 18, and prediction result output part 19.

Operation part 11 receives an operation by a user. For example, operation part 11 is realized by a keyboard, a mouse, and the like.

Display 12 displays various types of information. Specifically, for example, display 12 displays corrected sensor data that is the sensor data corrected by processing part 17. Furthermore, for example, display 12 displays a screen for receiving setting of an allowable position that can be evaluated as driver 70 reaching the target position. Furthermore, for example, display 12 displays a screen for receiving selection as to whether or not to correct the sensor data using a low-pass filter and selection of strength of the low-pass filter. In addition, for example, display 12 displays a screen for receiving a change in a setting value for calculating a settling time. For example, display 12 is realized by a display device such as a liquid crystal display, an organic electro luminescence (EL) display, or a projection device for projecting on a screen.

Storage 13 stores various types of information. For example, storage 13 is realized by a memory such as an SSD or a storage device such as a hard disk drive.

Controller 14 controls parameter adjustment system 10. Specifically, for example, controller 14 controls display or the like by display 12. For example, controller 14 is realized by a processor, a control circuit on which the processor is mounted, or a control device on which the processor and the control circuit are mounted.

Servo information output part 15 outputs servo information. For example, the servo information includes one or more control parameters and one or more position commands. For example, a specific value of each of the one or more control parameters is set by the user, and a specific value of each of the one or more position commands is set by the user. For example, servo information output part 15 is realized by a communication module or the like.

Acquisition part 16 acquires encoder information and sensor information. That is, acquisition part 16 acquires sensor data included in the sensor information. The sensor data is time-series data of a position deviation that is a difference between the target position and the actual position of driver 70, and is data detected using sensor 60. The target position of driver 70 is a target position for moving driver 70. The actual position of driver 70 is an actual position of driver 70. For example, acquisition part 16 is realized by a communication module or the like.

Processing part 17 corrects the sensor data on the basis of the position deviation detected using sensor 60 after the timing at which the movement of driver 70 based on the position command for moving driver 70 to the target position has ended. driver 70 is actually located at the target position after the timing at which the movement of driver 70 based on the position command has ended. For example, processing part 17 corrects the sensor data such that the position deviation detected using sensor 60 becomes 0 after the timing at which the movement of driver 70 based on the position command has ended. Note that, for example, processing part 17 may correct the sensor data such that the average value of the plurality of position deviations detected using sensor 60 becomes 0 after the timing at which the movement of driver 70 based on the position command has ended.

On the basis of the corrected sensor data, processing part 17 calculates a settling time which is a time from a timing at which driver 70 is located at the target position in the position command to a timing at which driver 70 reaches an allowable position where it can be evaluated that driver 70 has reached the target position. For example, the timing at which driver 70 reaches the allowable position where it can be evaluated that driver 70 has reached the target position is the timing at which the actual position of driver 70 finally reaches the allowable range including the target position. That is, driver 70 does not go out of the allowable range after the timing. For example, a setting value for calculating the settling time is preset. For example, when the change of the setting value is received, the changed setting value is set as the setting value used for the calculation of the subsequent settling time.

For example, processing part 17 corrects the sensor data using a low-pass filter. For example, the low-pass filter performs moving average processing. For example, the strength of the low-pass filter is selectable by the user. For example, the stronger the strength of the low-pass filter, the larger the number of position deviations used for the moving average processing. For example, processing part 17 is realized by a processor, a processing circuit on which the processor is mounted, or a processing device on which the processor and the processing circuit are mounted.

Learning part 18 learns the relationship between the control parameter and the operation result of production device 20. The operation result of production device 20 includes the settling time of driver 70. That is, learning part 18 learns the relationship between the control parameter and the settling time of driver 70. Specifically, for example, learning part 18 learns a tendency of a change in the operation result of production device 20 accompanying a change in the value of the control parameter. For example, learning part 18 performs learning using a sequential learning type machine learning method.

Prediction result output part 19 predicts the control parameter on the basis of the learning result by learning part 18 and outputs a prediction result. For example, prediction result output part 19 predicts a control parameter in which the settling time calculated on the basis of the corrected sensor data satisfies a predetermined condition. For example, the predetermined condition is matching with the target time, being within the target time, or the like. That is, for example, prediction result output part 19 predicts a control parameter in which the settling time calculated based on the corrected sensor data matches the target time or a control parameter in which the settling time calculated based on the corrected sensor data falls within the target time. For example, prediction result output part 19 is a learning model that predicts and outputs a control parameter in which the settling time of driver 70 satisfies a predetermined condition when the control parameter and the settling time of driver 70 in a case where driver 70 is moved using the control parameter are input. For example, prediction result output part 19 predicts and outputs the value of the control parameter such that the settling time of driver 70 satisfies a predetermined condition using an evolution strategy.

Servo control device 40 includes servo information acquiring part 41, servo information output part 42, storage 43, and controller 44.

Servo information acquiring part 41 acquires the servo information output by parameter adjustment system 10. For example, servo information acquiring part 41 is realized by a communication module or the like.

Servo information output part 42 outputs the servo information acquired by the servo information acquiring part 41. For example, servo information output part 42 is realized by a communication module or the like.

Storage 43 stores various kinds of information. For example, storage 43 is realized by a memory such as an SSD or a storage device such as a hard disk drive.

Controller 44 controls entire server control device 40. For example, controller 44 is realized by a control circuit equipped with a processor or a control device equipped with the processor and the control circuit.

Fig. 3 is a perspective view illustrating an example of production device 20.

As illustrated in Fig. 3, driver 70 is moved in a predetermined direction (here, the X axis direction of Fig. 3) by servomotor 30. For example, servo control device 40 controls servomotor 30 based on the position command to move driver 70 from the movement start position to the target position.

Sensor 60 is a sensor for detecting a position deviation that is a difference between a target position and an actual position of driver 70. Sensor 60 includes sensor 60a and sensor 60b. Sensor 60a is a sensor for detecting the actual position of driver 70. Sensor 60a detects the actual position of driver 70 by measuring the distance from sensor 60a to driver 70. Sensor 60b is a sensor for detecting a target position of driver 70. For example, sensor 60b detects the target position of driver 70 by measuring the distance from sensor 60b to object 90 located at the target position. For example, the position deviation that is the difference between the target position and the actual position of driver 70 can be calculated by (the value measured by sensor 60a) - (the value measured by sensor 60b). In a case where the value measured by sensor 60a does not include the offset error and the value measured by sensor 60b does not include the offset error, the position deviation when driver 70 is located at the target position is 0. For example, sensor 60a and sensor 60b are laser displacement meters.

Fig. 4 is a table illustrating an example of sensor data.

As illustrated in Fig. 4, for example, sensor 60 detects the position deviation from the timing at which driver 70 in the position command reaches the target position. The timing at which driver 70 in the position command reaches the target position is the timing at which the movement of driver 70 in the position command ends. For example, sensor 60 detects the position deviation at intervals of 0.01 [ms].

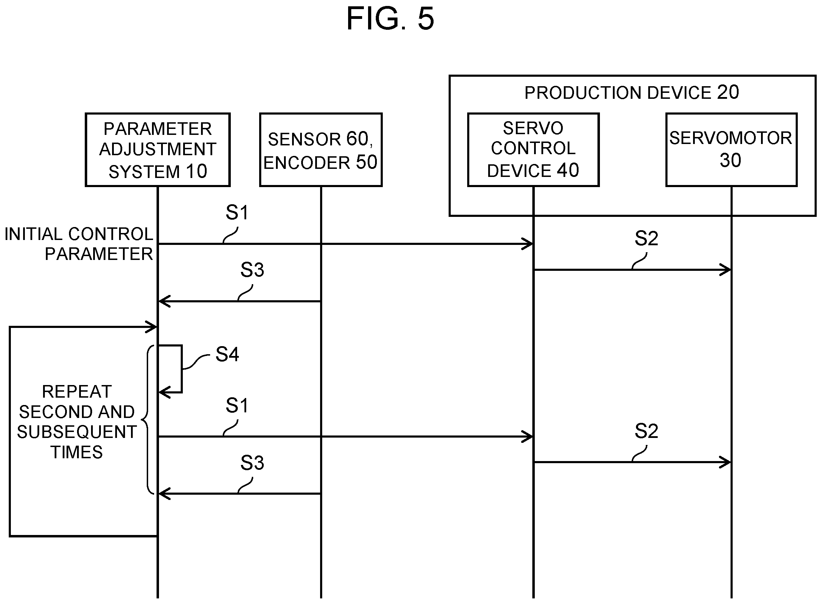

Fig. 5 is a sequence diagram illustrating an example of operation of parameter adjustment system 10 and the like of Fig. 1.

As illustrated in Fig. 5, parameter adjustment system 10 transmits the control parameter and the position command to servo control device 40 (step S1).

Servo control device 40 controls the operation of production device 20 based on the control parameter and the position command (step S2). Specifically, servo control device 40 sets a control parameter in servo control device 40, and controls servomotor 30 such that driver 70 moves based on the position command. As a result, servo control device 40 controls the operation of production device 20.

Parameter adjustment system 10 acquires encoder information and sensor information (step S3).

Parameter adjustment system 10 acquires an operation result of production device 20 based on the encoder information and the sensor information (step S4).

As described above, parameter adjustment system 10 acquires the operation result of production device 20 operated based on the transmitted control parameter and position command. Specifically, parameter adjustment system 10 acquires the settling time and the like of driver 70 moved based on the transmitted control parameter and position command.

For example, the above-described processing is repeatedly performed on the basis of at least one of the control parameter number, which is the number of control parameters, and the position command number, which is the number of position commands.

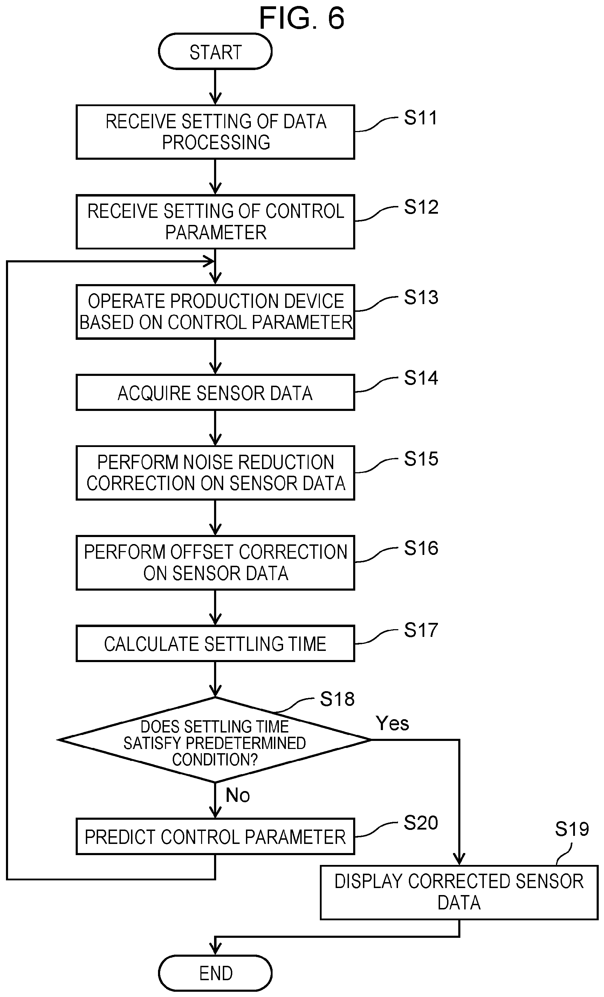

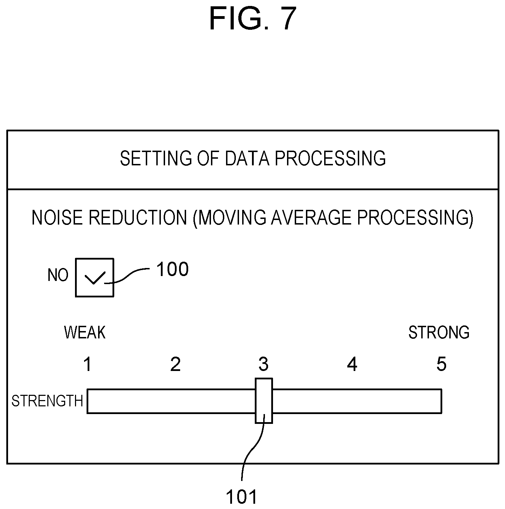

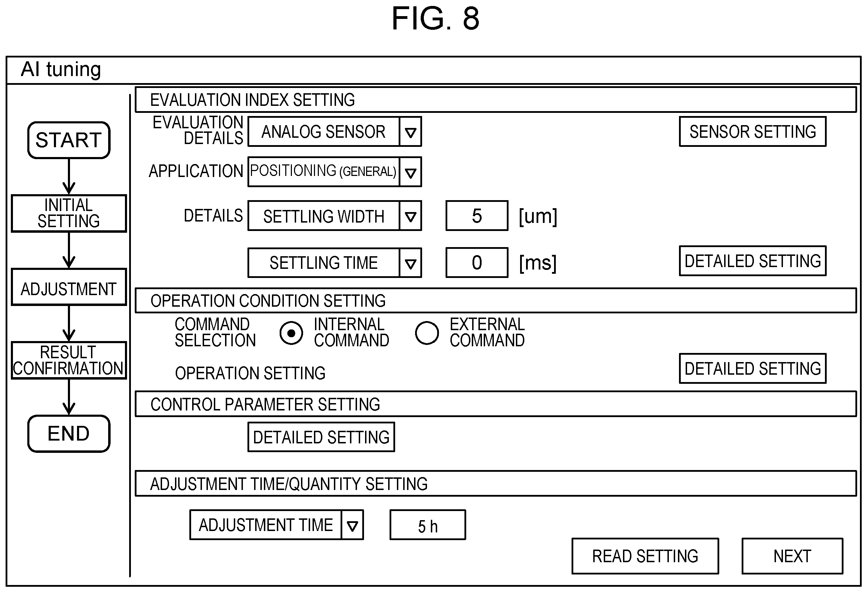

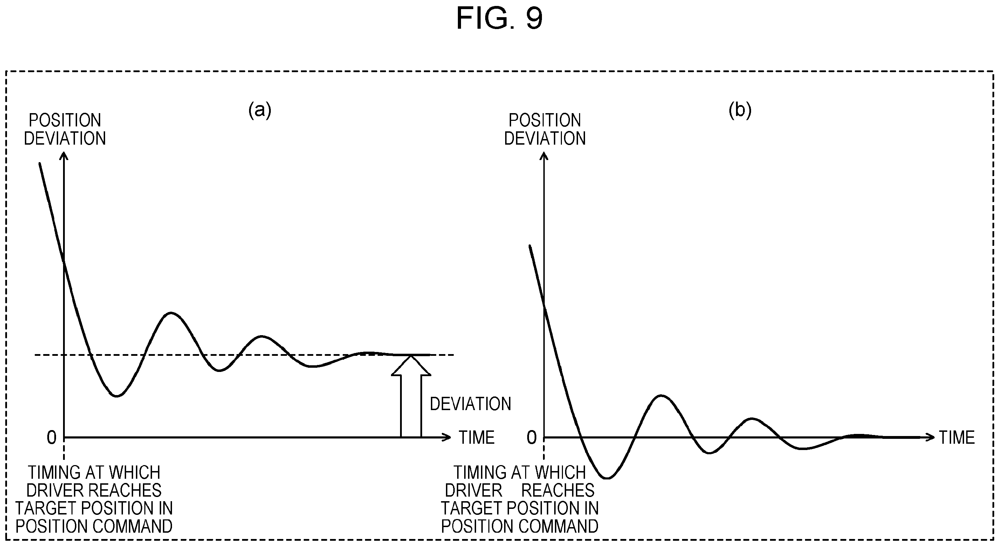

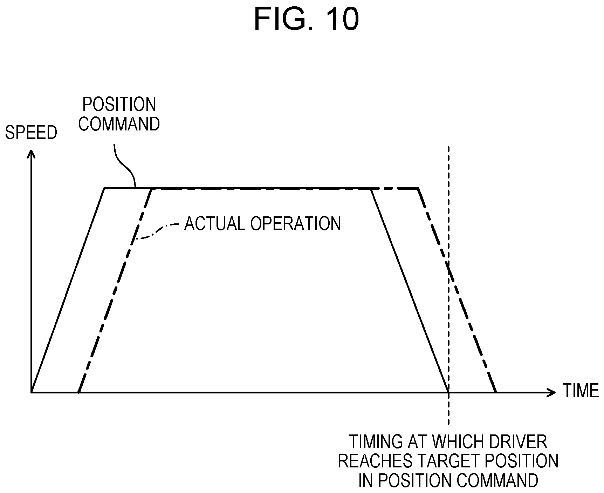

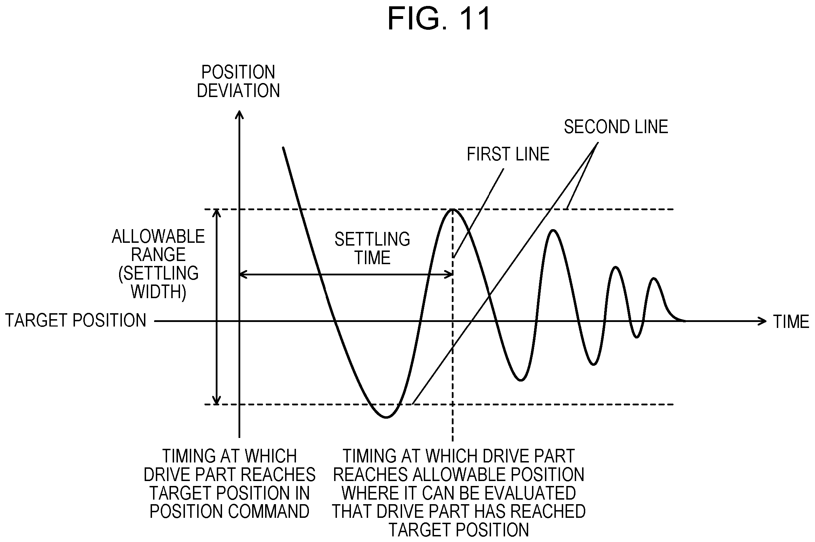

Fig. 6 is a flowchart illustrating an example of the operation of parameter adjustment system 10 of Fig. 1. Specifically, Fig. 6 is a flowchart illustrating an example of a parameter adjustment method performed by parameter adjustment system 10. Fig. 7 is a diagram illustrating an example of a display displayed on parameter adjustment system 10 of Fig. 1. Fig. 8 is a diagram illustrating another example of the display displayed on parameter adjustment system 10 of Fig. 1. Fig. 9 is a graph illustrating an example of sensor data. Fig. 10 is a graph illustrating an example of the position command. Fig. 11 is a graph for explaining a settling time.

As illustrated in Fig. 6, controller 14 receives a setting of data processing (referred to as a selection reception step, a setting reception step, or a change reception step) (step S11). For example, controller 14 receives the setting of the data processing by causing display 12 to display a screen for receiving the setting of the data processing.

Specifically, for example, as illustrated in Fig. 7, controller 14 causes display 12 to display a screen for receiving selection as to whether or not to correct the sensor data using the low-pass filter and selection of the strength of the low-pass filter, thereby receiving selection as to whether or not to correct the sensor data using the low-pass filter and selection of the strength of the low-pass filter. For example, the user may select not to correct the sensor data using the low-pass filter by checking check box 100. In addition, the user can select to correct the sensor data using the low-pass filter by unchecking check box 100. Furthermore, the user can select the strength of the low-pass filter by moving bar 101.

In addition, as illustrated in Fig. 8, controller 14 causes display 12 to display a screen for receiving the setting of the allowable position (specifically, setting of an allowable range (setting width)), thereby receiving the setting of the allowable position. For example, the user can set the allowable position by inputting a numerical value indicating the allowable range. Fig. 8 is also a screen for receiving a change in a setting value for calculating the settling time. Controller 14 causes display 12 to display a screen for receiving a change in the setting value for calculating the settling time, thereby receiving a change in the setting value for calculating the settling time. For example, the setting value includes an allowable range and the like. For example, the user can change the setting value by inputting a numerical value indicating the setting value. Note that, for example, the setting value is preset, and the preset setting value is displayed. However, in a case where a change in the setting value is received in step S11, the changed setting value is set as the setting value to be used for calculation of the subsequent settling time, and the changed setting value is displayed. In addition, on the screen illustrated in Fig. 8, the user can set a target time or the like which is a target settling time.

For example, controller 14 causes display 12 to display the screen illustrated in Fig. 7, and causes display 12 to display the screen illustrated in Fig. 8 after the timing at which the setting using the screen illustrated in Fig. 7 ends.

Returning to Fig. 6, controller 14 receives the setting of the control parameter (step S12). As illustrated in Fig. 8, for example, controller 14 receives the setting of the control parameter by causing display 12 to display a screen for receiving the setting of the control parameter. For example, when the user selects the detailed setting displayed under the control parameter setting, a screen for inputting the type of the control parameter and the numerical value of the control parameter is displayed, and the user can set the control parameter by inputting the type of the control parameter and the numerical value of the control parameter.

Returning to Fig. 6, controller 14 operates production device 20 on the basis of the control parameter (step S13). Specifically, controller 14 causes servo information output part 15 to output servo information including the control parameter set in step S12, causes servo control device 40 to control servomotor 30 on the basis of the output servo information, and moves driver 70 from the movement start position to the target position. For example, the position command included in the servo information is a position command set in advance by the user.

Acquisition part 16 acquires sensor data (acquisition step) (step S14). Specifically, acquisition part 16 acquires sensor data that is time-series data of a position deviation that is a difference between a target position and an actual position of driver 70 in production device 20 including driver 70 driven by servomotor 30 and that is detected using sensor 60. The sensor data is time-series data of a position deviation that is a difference between the target position and the actual position of driver 70 moved in step S13.

Processing part 17 performs noise reduction correction on the sensor data (step S15). Specifically, in a case where it is selected in step S11 to correct the sensor data using the low-pass filter, processing part 17 corrects the sensor data acquired in step S14 using the low-pass filter having the strength set in step S11. For example, the low-pass filter performs moving average processing. For example, in a case where it is selected not to correct the sensor data using the low-pass filter in step S11, processing part 17 does not perform noise reduction correction on the sensor data.

Processing part 17 performs offset correction on the sensor data (correction step) (step S16). Specifically, processing part 17 corrects the sensor data on the basis of the position deviation detected using sensor 60 after the timing at which the movement of driver 70 based on the position command for moving driver 70 to the target position ends. For example, in step S16, processing part 17 corrects the sensor data so that the position deviation detected using sensor 60 becomes 0 after the timing at which the movement of driver 70 based on the position command has ended. For example, in a case where an offset error is included in at least one of the value measured by sensor 60a and the value measured by sensor 60b, as illustrated in part (a) of Fig. 9, there is a case where the position deviation detected using sensor 60 after the timing at which the movement of driver 70 based on the position command ends does not become 0 (there is a deviation). In such a case, processing part 17 corrects the sensor data so that the position deviation detected using sensor 60 becomes 0 after the timing at which the movement of driver 70 based on the position command ends, and generates the corrected sensor data as illustrated in part (b) of Fig. 9. For example, when the position deviation detected using sensor 60 after the timing at which the movement of driver 70 based on the position command has ended is 10, processing part 17 generates the corrected sensor data by subtracting 10 from each position deviation in the sensor data. In a case where the sensor data is subjected to noise reduction correction in step S15, processing part 17 performs offset correction on the sensor data subjected to the noise reduction correction.

Processing part 17 calculates the settling time (calculation step) (step S17). Specifically, processing part 17 calculates the settling time, which is the time from the timing at which driver 70 reaches the target position in the position command to the timing at which driver 70 reaches the allowable position where it can be evaluated that the driver has reached the target position, based on the corrected sensor data. For example, the corrected sensor data is the sensor data corrected in step S15 and further corrected in step S16. Note that, for example, the corrected sensor data may be sensor data that has not been subjected to noise reduction correction. As illustrated in Fig. 10, for example, the timing at which driver 70 reaches the target position in the position command is the timing at which driver 70 decelerates and the speed of driver 70 becomes 0 in the position command. The actual operation of driver 70 is delayed from the position command, and the timing at which driver 70 reaches the allowable position where it can be evaluated that the driver has reached the target position is delayed from the timing at which driver 70 reaches the target position in the position command. As illustrated in Fig. 11, for example, a line connecting a position deviation located outside the allowable range last among the plurality of position deviations included in the corrected sensor data and a new position deviation next to the position deviation among the plurality of position deviations included in the corrected sensor data is defined as a first line. A straight line (a straight line parallel to the time axis) that intersects with the first line and indicates the upper limit value or the lower limit value of the allowable range is defined as a second line. In this case, processing part 17 sets the time at the point where the first line and the second line intersect as the timing at which driver 70 reaches the allowable position where it can be evaluated that the driver has reached the target position.

Returning to Fig. 6, controller 14 determines whether or not the settling time satisfies a predetermined condition (step S18). Specifically, controller 14 determines whether or not the settling time calculated in step S17 satisfies a predetermined condition.

When the settling time satisfies the predetermined condition (Yes in step S18), controller 14 displays the corrected sensor data (display step) (step S19). For example, controller 14 causes display 12 to display the corrected sensor data.

When the settling time does not satisfy the predetermined condition (No in step S18), prediction result output part 19 predicts the control parameter (step S20). For example, as illustrated in Fig. 5, the settling time of driver 70 when driver 70 is moved using each of a plurality of control parameters and driver 70 is moved using the control parameter is acquired, and learning part 18 learns the relationship between the control parameter and the settling time in advance. For example, in a case where the predetermined condition matches the target time, when the control parameter set in step S12 and the settling time calculated in step S17 are input, prediction result output part 19 predicts what value the control parameter should be set to cause the settling time of driver 70 to approach the target time using the learning result by learning part 18, and outputs the predicted control parameter.

In a case where the control parameter is predicted by prediction result output part 19, controller 14 operates production device 20 again on the basis of the predicted control parameter (step S13).

For example, in a case where the predetermined condition matches the target time, when the settling time obtained after production device 20 is operated again does not match the target time, prediction result output part 19 predicts again the control parameter with which the settling time approaches the target time, and controller 14 operates production device 20 again based on the predicted control parameter again.

For example, in a case where the predetermined condition matches the target time, when the settling time obtained after production device 20 is operated again matches the target time, the control parameter predicted by prediction result output part 19 in the immediately preceding step S20 is such a control parameter that the settling time satisfies the predetermined condition.

As described above, for example, in a case where the settling time does not satisfy the predetermined condition, prediction result output part 19 predicts the control parameter, operates production device 20 on the basis of the predicted control parameter, and calculates the settling time once or more. As a result, prediction result output part 19 predicts the control parameter such that the settling time satisfies the predetermined condition (prediction step) (step S20).

As described above, in parameter adjustment system 10 and the like, since the settling time can be calculated with high accuracy, it is possible to predict a control parameter in which the settling time satisfies a predetermined condition more quickly, to suppress an increase in power consumption required for adjustment of the control parameter, and to efficiently adjust the control parameter.

A parameter adjustment method according to the exemplary embodiment is a parameter adjustment method for adjusting a control parameter for servo control device 40 to control servomotor 30, and includes an acquisition step (step S14), a correction step (S16), a calculation step (S17), and a prediction step (step S20). In the acquisition step, the sensor data that is the time-series data of the position deviation that is the difference between the target position and the actual position of driver 70 in the target device (production device 20) including driver 70 driven by servomotor 30 and is detected using sensor 60 is acquired. In the correction step, the sensor data is corrected on the basis of the position deviation detected using sensor 60 after the timing at which the movement of driver 70 based on the position command for moving driver 70 to the target position ends. In the calculation step, the settling time, which is the time from the timing at which driver 70 reaches the target position in the position command to the timing at which driver 70 reaches the allowable position where it can be evaluated that the driver has reached the target position, is calculated based on the corrected sensor data. In the predicting step, a control parameter is predicted such that the settling time calculated based on the corrected sensor data satisfies a predetermined condition.

According to this, the settling time, which is the time from the timing at which driver 70 is located at the target position in the position command to the timing at which driver 70 reaches the allowable position where it can be evaluated that the driver has reached the target position, is calculated based on the corrected sensor data, so that the settling time can be calculated more accurately. In addition, since the control parameter in which the settling time calculated based on the corrected sensor data satisfies the predetermined condition is predicted, the control parameter in which the settling time satisfies the predetermined condition can be more accurately predicted, and the control parameter can be efficiently adjusted.

In the parameter adjustment method according to the exemplary embodiment, in the correction step (step S16), the sensor data is corrected such that the position deviation detected using sensor 60 becomes 0 after the timing at which the movement of driver 70 based on the position command has ended.

According to this, since the sensor data can be easily corrected, the control parameter can be adjusted more efficiently.

Further, in the parameter adjustment method according to the exemplary embodiment, sensor 60 includes a laser displacement meter.

According to this, even when the laser displacement meter is used, the settling time can be calculated more accurately, and the control parameter can be adjusted efficiently.

The parameter adjustment method according to the exemplary embodiment includes a setting reception step (step S11) of receiving the setting of the allowable position.

According to this, the user can set the allowable position.

The parameter adjustment method according to the exemplary embodiment includes a display step (step S20) of displaying the corrected sensor data.

According to this, the user can recognize the corrected sensor data.

In addition, the parameter adjustment method according to the exemplary embodiment includes a selection reception step (step S11) of receiving the selection as to whether or not to correct the sensor data using the low-pass filter and the selection of the strength of the low-pass filter.

According to this, the user can select whether or not to correct the sensor data using the low-pass filter, and can select the strength of the low-pass filter.

Furthermore, in the parameter adjustment method according to the exemplary embodiment, the low-pass filter performs moving average processing.

According to this, since the sensor data can be corrected by the moving average processing, the control parameter in which the settling time satisfies the predetermined condition can be predicted more accurately, and the control parameter can be adjusted more efficiently.

In addition, the parameter adjustment method according to the exemplary embodiment includes a change reception step (step S11) of receiving a change of a setting value in which the setting value necessary for calculating the settling time is preset. When the change of the setting value is received in the change reception step, the changed setting value is set as the setting value to be used for calculation of the subsequent settling time.

According to this, the settling time can be calculated using the preset setting value, and when a change in the setting value is received, the settling time can be calculated using the changed setting value.

Further, in the parameter adjustment method according to the exemplary embodiment, the target device (production device 20) includes a mounting device, a processing device, or a machining device.

According to this, even when the target device (production device 20) includes the mounting device, the processing device, or the machining device, the control parameter can be adjusted more efficiently.

Parameter adjustment system 10 according to the exemplary embodiment performs the above parameter adjustment method.

According to this, parameter adjustment system 10 has the same effects as those of the parameter adjustment method described above.

### (Other exemplary embodiments and the like)

As described above, the exemplary embodiments have been described as an illustration of the techniques disclosed in the present application. However, the technology according to the present disclosure is not limited thereto, and can also be applied to exemplary embodiments or modifications in which changes, replacements, additions, omissions, and the like are made as appropriate without departing from the spirit of the present disclosure.

In addition, general or specific aspects of the present disclosure may be realized by a system, an apparatus, a method, an integrated circuit, a computer program, or a computer-readable recording medium such as a CD-ROM. In addition, the present invention may be realized by an arbitrary combination of a system, an apparatus, a method, an integrated circuit, a computer program, and a recording medium.

For example, the present disclosure may be realized as the parameter adjustment system of the above-described exemplary embodiment. Further, the present disclosure may be realized as a parameter adjustment device. Further, the present disclosure may be realized as a parameter adjustment method. Furthermore, the present disclosure may be realized as a program for causing a computer to execute a parameter adjustment method, or may be realized as a computer-readable non-transitory recording medium in which such a program is recorded.

### (Appendix)

The above description of the exemplary embodiments discloses the following technologies.

### (Technology 1)

A parameter adjustment method for adjusting a control parameter for a servo control device to control a servomotor, the parameter adjustment method including:
an acquisition step of acquiring sensor data detected by using a sensor, the sensor data being time-series data of a position deviation that is a difference between a target position and an actual position of a driver in a target device including the driver driven by the servomotor;
a correction step of correcting the sensor data based on the position deviation detected using the sensor after a timing at which the movement of the driver based on a position command for moving the driver to the target position ends;
a calculation step of calculating, on a basis of the corrected sensor data, a settling time that is a time from a timing at which the driver reaches the target position in the position command to a timing at which the driver reaches an allowable position where it can be evaluated that the driver has reached the target position; and
a prediction step of predicting the control parameter such that the settling time calculated based on the corrected sensor data satisfies a predetermined condition.

### (Technology 2)

The parameter adjustment method according to (Technology 1), in which in the correction step, the sensor data is corrected such that the position deviation detected using the sensor becomes 0 after a timing at which the movement of the driver based on the position command has ended.

### (Technology 3)

The parameter adjustment method according to (Technology 1) or (Technology 2), in which the sensor includes a laser displacement meter.

### (Technology 4)

The parameter adjustment method according to any one of (Technology 1) to (Technology 3), further including a setting reception step of receiving setting of the allowable position before the calculation step.

### (Technology 5)

The parameter adjustment method according to any one of (Technology 1) to (Technology 4), further including a display step of displaying the corrected sensor data.

### (Technology 6)

The parameter adjustment method according to any one of (Technology 1) to (Technology 5), further including a selection reception step of receiving selection as to whether or not to correct the sensor data using a low-pass filter and selection of strength of the low-pass filter before the correction step.

### (Technology 7)

The parameter adjustment method according to (Technology 6), in which the low-pass filter performs moving average processing.

### (Technology 8)

The parameter adjustment method according to any one of (Technology 1) to (Technology 7), further including:
presetting a setting value for calculating the settling time;
a change reception step of receiving a change of the setting value; and
setting, when receiving the change of the setting value in the change reception step, the changed setting value as the setting value to be used for subsequent calculation of the settling time.

### (Technology 9)

The parameter adjustment method according to any one of (Technology 1) to (Technology 8), in which the target device includes a mounting device, a processing device, or a machining device.

### (Technology 10)

A parameter adjustment system that performs the parameter adjustment method according to any one of (Technology 1) to (Technology 9).

### INDUSTRIAL APPLICABILITY

A parameter adjustment method and a parameter adjustment system according to the present disclosure can efficiently adjust a control parameter of a control device. As described above, the parameter adjustment method and the parameter adjustment system according to the present disclosure are industrially useful.

### REFERENCE MARKS IN THE DRAWINGS

10: parameter adjustment system
11: operation part
12: display
13: storage
14: controller
15: servo information output part
16: acquisition part
17: processing part
18: learning part
19: prediction result output part
20: production device
30: servomotor
40: servo control device
41: servo information acquiring part
42: servo information output part
43: storage
44: controller
50: encoder
60, 60a, 60b: sensor
70: driver
80: sensor information collecting device
90: object
100: check box
101: bar

## Claims

1. A parameter adjustment method for adjusting a control parameter for a servo control device to control a servomotor, the parameter adjustment method comprising:
acquiring sensor data detected by using a sensor, the sensor data being time-series data of a position deviation that is a difference between a target position and an actual position of a driver in a target device including the driver driven by the servomotor;
correcting the sensor data based on the position deviation detected using the sensor after a timing at which the movement of the driver based on a position command for moving the driver to the target position has ended;
calculating, based on the sensor data corrected, a settling time that is a time from a timing at which the driver reaches the target position in the position command to a timing at which the driver reaches an allowable position where it can be evaluated that the driver has reached the target position; and
predicting the control parameter such that the settling time calculated based on the corrected sensor data satisfies a predetermined condition.

2. The parameter adjustment method according to Claim 1, further comprising correcting the sensor data such that the position deviation detected using the sensor becomes 0 after a timing at which the movement of the driver based on the position command has ended.

3. The parameter adjustment method according to Claim 1 or 2, wherein the sensor includes a laser displacement meter.

4. The parameter adjustment method according to Claim 1 or 2, further comprising receiving setting of the allowable position before calculating the settling time.

5. The parameter adjustment method according to Claim 1 or 2, further comprising displaying the corrected sensor data.

6. The parameter adjustment method according to Claim 1 or 2, further comprising receiving selection as to whether or not to correct the sensor data using a low-pass filter and selection of strength of the low-pass filter before correcting the sensor data.

7. The parameter adjustment method according to Claim 6, wherein the low-pass filter performs moving average processing.

8. The parameter adjustment method according to Claim 1 or 2, further comprising:
presetting a setting value for calculating the settling time;
receiving a change of the setting value; and
setting, when receiving the change of the setting value in a step of receiving the change, the changed setting value as the setting value to be used for subsequent calculation of the settling time.

9. The parameter adjustment method according to Claim 1 or 2, wherein the target device is any one of a mounting device, a processing device, and a machining device.

10. A parameter adjustment system which performs the parameter adjustment method according to Claim 1 or 2.
